(19) Europäisches Patentamt
European Patent Office
Office européen des brevets

(11) Veröffentlichungsnummer: 0 124 478 B1

# (12) EUROPÄISCHE PATENTSCHRIFT

(45) Veröffentlichungstag der Patentschrift: 04.02.87

(21) Anmeldenummer: 84810127.5

(22) Anmeldetag: 19.03.84

(51) Int. Cl.⁴: C 11 D 3/00, B 01 D 13/04, C 09 B 47/04, C 09 B 67/00, D 06 L 3/12

## (54) Verfahren zur Herstellung von festen Photoaktivatorpräparaten.

(30) Priorität: 25.03.83 CH 1642/83

(43) Veröffentlichungstag der Anmeldung: 07.11.84 Patentblatt 84/45

(45) Bekanntmachung des Hinweises auf die Patenterteilung: 04.02.87 Patentblatt 87/6

(84) Benannte Vertragsstaaten: CH DE FR GB IT LI

(56) Entgegenhaltungen:
EP-A-0 041 240
EP-A-0 047 716
DE-A-2 812 278
FR-A-2 513 276

(73) Patentinhaber: CIBA- GEIGY AG, Klybeckstrasse 141, CH- 4002 Basel (CH)

(72) Erfinder: Preiswerk, Werner, Blütenweg 14, CH-4102 Binningen (CH)
Erfinder: Bruttel, Beat, Dr., Ob den Reben 5, CH-4461 Böckten (CH)

EP 0 124 478 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft ein Verfahren zur Herstellung von festen Photoaktivatorpräparaten, die sulfonierte Zink- oder/und Aluminiumphthalocyanine als Photoaktivatoren enthalten sowie die so erhaltenen lagerstabilen Präparate.

Sulfonierte Zink- und Aluminiumphthalocyanine sind als ausgezeichnete Photoaktivatoren bekannt, die vornehmlich als Photobleichmittel, gegebenenfalls auch als antimikrobiell wirksame Mittel eingesetzt werden können. Siehe z.B. US-A- 3,927,967, 4,094,806, 4,033,718, 4,256,597, 4,256,598, 4,318,883, 4,166,718, 4,311,605; EP-A- 47 716. Diese sulfonierten Zink- und Aluminiumphthalocyanine werden z.B. als Photobleichmittel in verschiedenen Waschmitteln eingesetzt.

Bisher bereitete es grosse Schwierigkeiten, brauchbare Handelsformen der genannten Photoaktivatoren herzustellen. Die Phthalocyaninsulfonate fallen aus der Synthese relativ unrein an. Sie enthalten in der Regel bis zu 30 % organische und anorganische Nebenprodukte. Letztere sind hauptsächlich Salze wie NaCl und $Na_2SO_4$. An organischen Nebenprodukten liegt eine Vielzahl von teilweise nicht identifizierten Verbindungen vor, beispielsweise in einer Menge bis zu 15 %. Diese Nebenprodukte sind in hohem Masse unerwünscht, da sie beispielsweise die Wirkung des Photoaktivators beeinträchtigen könnten.

Es wurde versucht, diese Nebenprodukte auf chemischem Wege abzutrennen. Die Resultate konnten jedoch nicht voll befriedigen. Die auf diese Weise erhaltenen wässrigen Lösungen enthielten noch immer eine zu grosse Menge an Nebenprodukten, enthielten den Photoaktivator nicht in der wünschbaren hohen Konzentration und waren auch nicht hinreichend lagerstabil. Ein weiterer Nachteil dieser flüssigen Formulierungen bestand darin, dass sie häufig gelierten, d.h. dass ihre Viskosität zunahm. Dieser unerwünschte Effekt führte oft dazu, dass die Lösungen gelartig wurden und kaum mehr giessbar waren. Dieses Problem trat besonders im Falle des sulfonierten Aluminiumphthalocyanins auf. Ein weiterer prinzipieller Nachteil von flüssigen Handelsformen besteht darin, dass sie relativ grosse Volumina beanspruchen und damit Transportprobleme schaffen.

Verwendet man hingegen die genannten Photoaktivatoren in der aus der Synthese anfallenden getrockneten Pulverform, treten ebenfalls Nachteile auf: Diese Pulver neigen zu Staubentwicklung, sind nicht hinreichend lagerstabil und enthalten ebenfalls die oben beschriebenen unerwünschten Verunreinigungen. Die Kaltwasserlöslichkeit und Abriebfestigkeit sind ebenfalls nicht befriedigend. Ausserdem sind solche Pulver hygroskopisch. Eine daraus hergestellte wässrige Lösung neigt ebenso wie die flüssigen Formulierungen dazu, zu gelieren.

Aufgabe der Erfindung war es nun, eine Handelsform für die genannten Photoaktivatoren zu finden, die die vorstehend beschriebenen Nachteile nicht aufweist. Die Aufgabe bestand insbesondere darin, eine feste, lagerstabile, staubfreie, möglichst wenig organische Verunreinigungen enthaltende Handelsform zu finden.

Es wurde überraschenderweise gefunden, dass die vorstehend genannten Aufgaben dadurch gelöst werden können, dass man eine Rohlösung der genannten Photoaktivatoren über eine bestimmte, modifizierte halbdurchlässige Membran führt und die erhaltene konzentrierte wässrige Lösung einem schonenden Trocknungsprozess, vorzugsweise einem Granulierungsprozess unterwirft. Membrantrennverfahren sind z.B. aus DE-A- 22 04 725, 28 05 891 und 29 48 292 EP-A- 0 041 240 und EP-A- 39 782 bekannt. Die veröffentlichte europäische Patentanmeldung 37 382 beschreibt ein Verfahren zur Herstellung von festen Farbstoffpräparaten, insbesondere von Reaktivfarbstoffe enthaltenden Präparaten, mit Hilfe eines Membrantrennverfahrens, wobei gegebenenfalls verschiedene Hilfsmittel zugesetzt werden.

In keiner der genannten Veröffentlichungen ist beschrieben oder nahegelegt, dass durch das erfindungsgemässe Verfahren feste Photoaktivatorpräparate mit sehr hoher Lagerstabilität und hoher Schüttdichte erhalten werden, die nicht hygroskopisch sind, nicht verklumpen, ausgezeichnet kaltwasserlöslich sind und die überraschenderweise extrem wenig störende organische Verunreinigungen enthalten (verglichen mit den Farbstoffpräparaten des Standes der Technik), und die mit Wasser Lösungen bilden, die nicht gelieren.

Das erfindungsgemässe Verfahren zur Herstellung von festen Photoaktivatorpräparaten enthaltend sulfonierte Zink- oder/und Aluminiumphthalocyanine als Photoaktivatoren ist dadurch gekennzeichnet, dass man eine die genannten Photoaktivatoren enthaltende Rohlösung über eine halbdurchlässige, asymmetrische, einen Porendurchmesser von 0,1 bis 50 nm aufweisende Membran führt, die aus einem Celluloseacetat-Grundgerüst, das durch Umsetzung mit einer reaktive Gruppierungen aufweisenden ionischen Verbindung modifiziert ist, besteht, oder die aus einem Grundgerüst besteht, das Polyacrylnitril oder Copolymerisat aus Acrylnitril und anderen äthylenisch ungesättigten Monomeren enthält, welches durch Umsetzung mit Hydroxylamin und anschliessender Umsetzung mit einer polyfunktionellen monomeren Verbindung, einem polyfunktionellen Polymer und einer reaktive Gruppierungen aufweisenden ionischen Verbindung modifiziert ist, und anschliessend die erhaltene konzentrierte Photoaktivatorlösung schonend trocknet, wobei vor der Trocknung in der Waschmittelindustrie übliche Coupagemittel oder/und oberflächenaktive Substanzen zugegeben werden können.

Die im erfindungsgemässen Verfahren verwendbaren, halbdurchlässigen Membranen sollen höhermolekulare Stoffe zurückhalten, während sie einen hohen Durchfluss von Wasser und gelösten Stoffen mit einem niedrigen Molekulargewicht, z.B. Salzen, wie Natriumchlorid, Natriumsulfat, Kaliumchlorid, Ammoniumsulfat, Natriumphosphat, Kaliumsulfat, Natriumacetat oder niedrigmolekularen Verunreinigungen, z.B. nicht umgesetzte oder teilweise zersetzte Ausgangsprodukte, gewährleisten. Sie sollen aber auch

verschieden geladene Ionen trennen können.

Der Rückhalt bzw. die Abtrennung ("cut off level") wird durch das Molekulargewicht bzw. die ionische Beladung bestimmt. Diese sogenannte Membran-Hyperfiltration wird auch Umkehr-Osmose (Reverse Osmosis) genannt und ist mit der Ultrafiltration verwandt. Unter diesem Begriff werden Abtrennungsvorgänge im molekularen Bereich verstanden.

Die erfindungsgemäss verwendbaren Membranen sind halbdurchlässige, ionische, asymmetrische Membranen, deren Poren einen Durchmesser von 0,1 bis 50 nm aufweisen. Sie haben einen "cut off level" von beispielsweise 300 bis 500. Für das Verfahren gemäss vorliegender Erfindung sind Membranen mit einem "cut off level" von 400 bis 500 besonders geeignet. Sie lassen Wasser und gelöste Stoffe, die auf Grund ihrer Molekulargrössen unterhalb des Abtrenn-Niveaus ("cut off level") liegen, bei hohen Geschwindigkeiten pro Flächeneinheit und bei geringem bis mittlerem Druck durchtreten. Erfindungsgemäss werden Drucke von z.B. 10 bis 100 bar, vorzugsweise von 10 bis 30 bar und insbesondere von 20 bis 30 bar verwendet. Der Druck kann z.B. mittels einer Pumpe ausgeübt werden.

In einem Filtrationsgang kann der Entsalzungseffekt ohne Photoaktivatorverlust bis zu 70 und mehr Prozent betragen. Dabei nimmt das Volumen der Lösung der zurückgehaltenen Substanzen (konzentratseitig) entsprechend ab und die Konzentration des zurückgehaltenen Teils zu.

Wird eine weitere Verminderung der niedermolekularen Komponente gewünscht, so kann dies ohne Schwierigkeiten nach Verdünnung der zurückgehaltenen Lösung oder Suspension mit Wasser zweckmässig auf das Ausgangsvolumen durch ein- oder mehrmalige Wiederholung des Verfahrens erreicht werden. Die Trennung kann auch kontinuierlich durchgeführt werden, indem die Zufuhrgeschwindigkeit des Wassers derjenigen der Permeatabnahme angepasst wird.

Die erfindungsgemäss einsetzbaren Membranen weisen ein Celluloseacetat- oder Polyacrylnitril- oder ein Acrylnitril/andere äthylenisch ungesättigte Monomere-Copolymerisat-Grundgerüst auf, das in der oben beschriebenen Weise modifiziert ist. Technisch bewährt haben sich vor allem Membranen auf Basis von Celluloseacetat.

Als reaktive Reagenzien, die eine ionisierbare Gruppe enthalten, kommen farblose und farbige Verbindungen in Betracht, z.B. ionogene Reaktivfarbstoffe, die verschiedenen Klassen angehören können, wie Anthrachinon-, Azo- oder Formazanfarbstoffe. Als farblose Verbindungen kommen etwa Derivate der 4,4'-Diaminostilben-2,2'-disulfonsäure, z.B. 4,4'-Bis-(4',6'-dichlortriazin-2'-yl)aminostilben-2,2'-disulfonsäure und ähnliche Verbindungen in Betracht. Als Reaktivgruppen, welche die Bindung dieser Reagenzien an die Ausgangspolymeren ermöglichen, seien die folgenden genannt: Carbonsäurehalogenidgruppen, Sulfonsäurehalogenidgruppen, Reste von α,β-ungesättigten Carbonsäuren oder Amiden, z.B. der Acryl-, Methacryl-, α-Chloracryl- oder α-Bromacrylsäure, Acrylamidreste, Reste vorzugsweise niedriger Halogenalkylcarbonsäuren, z.B. der Chloressigsäure, α,β-Dichlorpropionsäure oder α,β-Dibrompropionsäure; Reste von Fluorcyclobutancarbonsäuren, z.B. der Trioder Tetrafluorcyclobutancarbonsäure; Reste mit Vinylacylgruppen, z.B. Vinylsulfongruppen oder Carboxyvinylgruppen; Reste, die Aethylsulfonyl-($-SO_2CH_2CH_2OSO_2OH$, $-SO_2CH_2CH_2Cl$) oder Aethylaminosulfonylgruppen ($-SO_2NHCH_2CH_2OSO_2OH$) enthalten und halogenierte heterocyclische Reste, wie z.B. Reste von Dihalogenchinoxalinen, Dihalogenpyridazonen, Dihalogenphthalazinen, halogenbenzthiazolen oder vorzugsweise halogenierten Pyrimidinen oder 1,3,5-Triazinen, wie z.B. von Monohalogentriazinen, Dihalogentriazinen, 2,4-Dihalogenpyrimidinen oder 2,5,6-Trihalogenpyrimidinen. Geeignete Halogenatome in den vorgenannten Resten sind Fluor-, Brom- und insbesondere Chloratome.

Als ionisierbare Gruppen sind z.B. Sulfatogruppen, Sulfonsäuregruppen, Sulfonsäureamidgruppen, Carbonsäuregruppen, Carbonsäureamidgruppen, Hydroxyl-, Thiol-, Isocyanat- und/oder Thioisocyanatgruppen, von primären, sekundären oder tertiären Aminogruppen und Wasserstoff gebildete Ammoniumgruppen oder quaternäre Ammoniumgruppen, ferner Phosphonium- oder Sulfoniumgruppen geeignet. Bevorzugt sind reaktive Verbindungen (Reaktivfarbstoffe) mit Sulfonsäure-, Carbonsäure- oder Ammoniumgruppen.

Besonders günstige Ergebnisse werden in manchen Fällen mit sulfonsäuregruppenhaltigen Verbindungen erzielt. Besonders wertvoll und vielseitig anwendbar sind die Polymermembranen, die durch einen sulfonsäuregruppenhaltigen Azofarbstoff modifiziert sind. Der Azofarbstoff kann auch komplex gebundenes Metall, beispielsweise Kupfer, enthalten.

Membranen aus (teilweise acetyliertem) Celluloseacetat können z.B. direkt durch Umsetzung mit den zuvor genannten reaktiven ionischen Verbindungen, insbesondere anionischen Reaktivfarbstoffen, modifiziert werden (siehe z.B. DE-A- 25 05 254).

Eine weitere Modifikation von Celluloseacetat kann z.B. durch folgende chemische Umsetzung (in der angegebenen Reihenfolge) mit 1) einer polyfunktionellen monomeren Verbindung mit mindestens zwei funktionellen Gruppen (z.B. Cyanurchlorid); 2) einem polyfunktionellen Oligomer oder Polymer (z.B. Polyäthylenimin); und 3) einer ionischen Verbindung (z.B. ionischer Reaktivfarbstoff, Reaktivgruppierungen und ionische Gruppen wie angegeben) (siehe z.B. veröffentlichte europäische Patentanmeldung 26399).

Die polyfunktionelle monomere Verbindung weist vorzugsweise mindestens 2 funktionelle Gruppen auf. Geeignete Verbindungen sind cyclische Kohlensäureimidhalogenide, Isocyanate, Isothiocyanate oder N-Methylolverbindungen, wobei Halogendi- oder -triazine, wie z.B. Cyanurhalogenide (Cyanurchlorid) oder Tri- oder Tetrahalogenpyrimidine (Tetrachlorpyrimidin) besonders geeignet sind.

Die polyfunktionellen Oligomeren oder Polymeren weisen vor allem aliphatische oder aromatische Amino-, Hydroxyl-, Thiol-, oder Isocyanat- und/oder Thioisocyanatgruppen auf. Geeignete polyfunktionelle Polymere

sind Polyäthylenimin, Polyvinylalkohol, Cellulosederivate, Polyvinylamin oder Polyvinylanilin; Polyäthylenimin ist bevorzugt.

Die Membran enthält als ionische Gruppe vorzugsweise Sulfonsäure-, Carbonsäure- oder Ammoniumgruppen. Besonders vorteilhaft sind die Membranen, die Reste eines anionischen Reaktivfarbstoffes enthalten.

Membranen, die aus einem Grundgerüst bestehen, das Polyacrylnitril oder Copolymerisat aus Acrylnitrilund anderen äthylenisch ungesättigten Monomeren enthält, sind z.B. in EP-A- 25 973 beschrieben. Die Herstellung von im erfindungsgemässen Verfahren einsetzbaren modifizierten Membranen dieses Typs ist in DE-A- 30 35 134 beschrieben. Das Membrangrundgerüst wird mit Hydroxylamin umgesetzt (Einführung von Amidoximgruppen in die Membran) und dann in gleicher Weise modifiziert, wie im Falle der Celluloseacetatmembranen in EP-A- 26 399 beschrieben.

Der Anteil der Acrylnitrileinheiten im Grundgerüst der Membran beträgt vorteilhaft mindestens 5 und vorzugsweise mindestens 20 Gewichtsprozent. Bevorzugt sind Copolymere von Acrylnitril und Vinylacetat, Vinyläthern, Vinylpyridin, Vinylchlorid, Styrol, Butadien, (Meth)acrylsäure, Maleinsäureanhydrid, 2-Aminomethylmethacrylat oder Allylverbindungen oder Ter- oder Tetrapolymere auf Acrylnitrilbasis.

Die so modifizierten Membranen können gegebenenfalls noch einer Wärmebehandlung unterworfen werden ("Tempern"). Durch die Wärmebehandlung wird weitgehend die Porengrösse der Membranhaut bestimmt. Man behandelt die Membran während 1 bis 30 Minuten bei einer Temperatur von 60 bis 90°C, zweckmässig indem man sie in warmes Wasser taucht. Gegebenenfalls ionisierbare Gruppen enthaltenden Verbindung ausgeführt werden. Ferner lässt sich die Umsetzung auch ausführen, bevor das polymere Material zur asymmetrischen Membran verarbeitet wird.

Die Membranen können verschiedene Formen aufweisen, können z.B. plattenförmig, blattförmig, röhrenförmig, in Form einer Tasche, eines Konus oder von Hohlfasern vorliegen. Um sie wirkungsvoll zur Stofftrennung einsetzen zu können, müssen sie in entsprechende Systeme (Module) integriert und in Anlagen (für die Druckpermeation) eingebaut werden.

Innerhalb des weiter oben angegebenen Bereichs kann die Porengrösse durch abgestuftes Tempern variiert werden. Zweckmässig beträgt die durchschnittliche Ladungsdichte (gleich Gehalt an ionisierbaren Gruppen) der Membran 1 bis 100 Milliäquivalent je kg trockene Membran.

Die erfindungsgemäss hergestellten festen Präparate enthalten als Photoaktivatoren sulfonierte Zink- oder Aluminiumphthalocyanine oder Mischungen derselben. Bevorzugt sind dabei sulfonierte Phthalocyanine der Formel

$$\left(\mathrm{MePc}\right)\begin{matrix}(SO_3M)_x\\(R)_y\end{matrix} \quad , \qquad (1)$$

worin MePc das Zink- oder Aluminiumphthalocyaninringsystem, M Wasserstoff, ein Alkalimetall- oder Ammoniumion, R Fluor, Chlor, Brom oder Jod, x eine beliebige Zahl von 1,3 bis 4 und y eine beliebige Zahl von 0 bis 4 bedeuten, wobei im Molekül vorhandene Substituenten R gleich oder verschieden sein können, oder deren Mischungen.

Besondere praktische Bedeutung hat die Herstellung von festen Präparaten von Phthalocyanin-Photoaktivatoren der Formel

$$\left(\mathrm{AlPc}\right)\begin{matrix}(SO_3M')_{x'}\\(R)_{y'}\end{matrix} \quad , \qquad (2)$$

worin AlPc das Alumimiumphthalocyaninringsystem, M' Wasserstoff, Natrium oder Kalium, x' eine beliebige Zahl von 2 bis 4, R Fluor, Chlor, Brom oder Jod und y' eine beliebige Zahl von 0 bis 1,5 bedeuten, sowie der Formel

$$\left(ZnPc\right)\!-\!(SO_3M')_{x'} \quad , \qquad (3)$$

worin ZnPc das Zinkphthalocyaninringsystem, M' Wasserstoff, Natrium oder Kalium und x' eine beliebige Zahl von 2 bis 4 bedeuten.

Aus der Synthese fallen die sulfonierten Al- und Zn-Phthalocyanine als rohe Syntheselösungen oder -dispersionen oder als Filter- oder Presskuchen an, die neben Wasser bis zu etwa 20 % organische Nebenprodukte (Ausgangsprodukte, Zersetzungsprodukte usw.) und ebenfalls bis zu 20 % inerte Salze (Elektrolyten) enthalten. Letztere rühren hauptsächlich von der Neutralisation und/oder dem Aussalzen des Phthalocyaninsulfonates aus der Syntheselösung her. Es sind dies z.B. Alkalimetall- und Erdalkalimetallsalze wie etwa Ammonium-, Magnesium-, Natrium- oder Kaliumchlorid, -sulfat oder -hydrogensulfat, vor allem Natriumsulfat und insbesondere Natriumchlorid. Zur Durchführung der ersten Stufe des erfindungsgemässen Verfahrens wird das direkt aus der Synthese anfallende Reaktionsgemisch oder eine wässrige Anschlämmung des oben erwähnten feuchten Filter- oder Presskuchens oder der bereits getrockneten Ware in der weiter oben beschriebenen Weise durch die halbdurchlässige Membran geführt.

In der zweiten Stufe des erfindungsgemässen Verfahrens wird die nach dem Durchgang durch die Membran erhaltene konzentrierte wässrige Photoaktivatorlösung schonend getrocknet. Diese Trocknung kann in einer beliebigen bekannten Apparatur ausgeführt werden, die sich zum Trocknen bzw. Granulieren einer Festsubstanz aus einer flüssigen Zubereitung eignen. Beispiele hiefür sind: Düsenzerstäuber, Scheibenzerstäuber, Mahltrockner, z.B. vom Typ "Mikrontrockner", oder eine Wirbelschicht-Anlage. Auch Gefriertrocknung kommt in Frage. Die Trocknung kann absatzweise oder kontinuierlich geführt werden. Bevorzugt wird im erfindungsgemässen Verfahren die Trocknung in einem Granulierapparat, z.B. mittels Sprühgranulierung, etwa in einem Düsenzerstäuber mit Granulieraufsatz, durchgeführt.

Die aus der ersten Stufe (Durchgang durch die Membran) erhaltene Lösung kann direkt getrocknet werden (ohne Zusatz von weiteren Stoffen). Man erhält dann ein Pulver mit sehr hohem Gehalt an Photoaktivator, das sonst nur noch Restfeuchte und sehr geringe Mengen an anorganischen Salzen (NaCl, $Na_2SO_4$) und organischen Synthesenebenprodukten enthält. Häufig ist es aber vorteilhaft, zur Verbesserung der mechanischen Eigenschaften und insbesondere zur Erzielung einer granulierten Handelsform, vor der Trocknung Coupagemittel oder/und oberflächenaktive Substanzen zuzusetzen, insbesondere solche, die in der Waschmittelindustrie üblich sind und die auch als Bestandteile für Waschmittel (Waschpulver) in Frage kommen. Dies hat den Vorteil, dass bei Einarbeitung der Photoaktivatoren in Waschmittel (insbesondere bei Zugabe zum Waschpulverslurry) keine das Waschmittel belastenden und eventuell negativ beeinflussenden Fremdsubstanzen eingebracht werden.

Als Coupagemittel kommen beispielsweise Alkalimetallsulfate, -carbonate, -borate, -phosphate, -polyphosphate, -bicarbonate und -silicate, Aminopolycarboxylate (wie z.B. Na-Aethylendiamintetraacetat), Phytate, Polyphosphonate und -carboxylate, Carboxymethylcellulose, Polysiloxane oder Aluminiumsilicate in Betracht, insbesondere Alkalimetallchloride, -phosphate und -sulfate, z.B. NaCl, $Na_2HPO_4$, $Na_3PO_4$ und $Na_2SO_4$, wobei letzteres besonders bevorzugt ist.

Die oberflächenaktiven Substanzen können den üblichen anionischen, nichtionischen, semipolaren, ampholytischen oder/und zwitterionischen Verbindungsklassen angehören. Beispiele dafür sind Seifen, lösliche Salze von Sulfonsäurehalbestern höherer Fettalkohole, höher und/oder mehrfach alkylsubstituierter Arylsulfonsäuren, Sulfocarbonsäureester mittlerer bis höherer Alkohole, Fettsäureacylaminoalkyl- oder -aminoarylglycerinsulfonate, Phosphorsäureester von Fettalkoholen usw., insbesondere Alkylbenzolsulfonate, Alkylsulfate, äthoxylierte Alkyläthersulfate, Paraffinsulfonate, α-Olefinsulfonate, α-Sulfocarbonsäuren, deren Salze und Ester, Alkylglyceryläthersulfonate, Fettsäuremonoglyceridsulfate oder -sulfonate, Alkylphenolpolyäthoxyäthersulfate, 2-Acyloxyalkansulfonate, β-Alkyloxyalkansulfonate, Seifen, äthoxylierte Fettalkohole, Alkylphenole, Polypropoxyglykole, Polypropoxy-äthylendiamine, Aminoxide, Phosphinoxide, Sulfoxide, aliphatische sekundäre und tertiäre Amine, aliphatische quaternäre Ammonium-, Phosphonium- und Sulfoniumverbindungen oder Mischungen der genannten Substanzen.

Die erhaltenen Pulver bzw. vorzugsweise Granulate sind staubarm, d.h. sie enthalten sehr wenig oder keine Teilchen mit einer Grösse unter 50 µm. Gegebenenfalls können kleine Mengen solcher Teilchen zusätzlich mechanisch abgetrennt werden, z.B. mit einem Luftstrahlsieb. Die erfindungsgemäss erhaltenen Präparate weisen Korngrössen im Bereich von 50-2000 µm, z.B. von 60-1000 µm auf. Sie weisen neben der erwähnten Staubarmut hohe mechanische Festigkeit (z.B. Abriebfestigkeit), gute Lagerstabilität, geringe Hygroskopizität, hohes Schüttgewicht, gute Kaltwasserlöslichkeit und Benetzbarkeit auf. Die wässrigen Lösungen dieser Präparate gelieren nicht wie dies nach bekannten Methoden hergestellte Lösungen der sulfonierten Zink- und Aluminiumphthalocyanin-Photoaktivatoren tun. Ausserdem sei nochmals der ausserordentlich geringe Gehalt an störenden organischen Verunreinigungen (vor allem Synthesenebenprodukten) zu erwähnen.

In einer besonders bevorzugten Ausführungsform setzt man der nach dem Durchgang durch die Membran erhaltenen konzentrierten Photoaktivatorlösung Natriumsulfat zu und trocknet durch Sprühgranulierung. Man setzt so viel Natriumsulfat zu, dass das erhaltene Photoaktivatorgranulat z.B. 1 bis 60, insbesondere 10 bis 60, vorzugsweise 35 bis 60 Gew.-% $Na_2SO_4$ enthält. Mit Vorteil wird jene Menge an $Na_2SO_4$ zugesetzt, die der in der Lösung vorhandenen Photoaktivatormenge entspricht.

Die nach Zugabe von $Na_2SO_4$ durch Sprühgranulierung erhaltenen Photoaktivatorpräparate zeichnen sich durch besonders gute Lagerbeständigkeit und geringe Wasseraufnahme aus. Das so erhaltene Granulat ist besonders gut rieselfähig und besitzt die vorstehend aufgezählten Vorteile der erfindungsgemässen Präparate in besonders hohem Masse.

Die nach dem erfindungsgemässen Verfahren erhaltenen festen Photoaktivatorpräparate selbt sind ebenfalls Gegenstand der vorliegenden Erfindung. Sie enthalten beispielsweise 30-97 Gew.% eines oder mehrerer sulfonierter Zink- oder/und Aluminiumphthalocyanine, insbesondere der Formel (I), 0-60 Gew.% eines oder mehrerer in der Waschmittelindustrie üblicher Coupagemittel oder/und oberflächenaktiver Substanzen, 2 bis 10 Gew.% Restfeuchte, 0,05 bis 1 Gew.% NaCl und 0,1 bis 2 Gew.% organische Nebenprodukte.

Bevorzugte Photoaktivatorpräparate enthalten 35 bis 60 Gew.% eines sulfonierten Phthalocyanins der Formel (I), insbesondere der Formel (2) oder (3), 35 bis 60 Gew.% $Na_2SO_4$, 3 bis 8 Gew.% Restfeuchte, 0,1 bis 0,5 Gew.% NaCl und 0,1 bis 1 Gew.% organische Nebenprodukte.

In den nachfolgenden Beispielen bedeuten, falls nichts anderes angegeben, Teile Gewichtsteile und Prozente Gewichtsprozente.

**Beispiele für die Herstellung von bevorzugten im erfindungsgemässen Verfahren einsetzbaren Membranen**

A. Nach Beispiel 1 der DE-A- 25 05 254:

Aus 25 g Celluloseacetat (Acetylierungsgrad = 39,8 %), 45 g Aceton und 30 g Formamid wird eine Lösung hergestellt. Man lässt sie drei Tage stehen, giesst sie auf eine Glasplatte und verstreicht sie mit einem Spatel zu einer Schicht von 0,6 mm Dicke, lässt während 5 Sekunden bei 25°C Lösungsmittel verdunsten, legt die Glasplatte für 2 Stunden in Eiswasser ein und zieht die entstandene Membran von der Glasplatte ab.

Die Membran wird dann in eine 5%ige wässrige Lösung der 1:2-Chromkom-plexverbindung des Farbstoffes der Formel

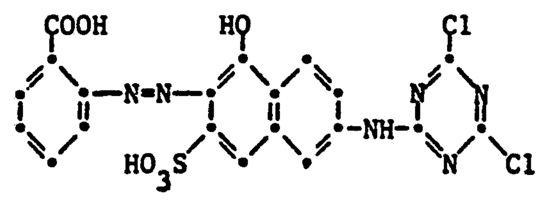

eingetaucht und verbleibt dort während 48 Stunden bei einem pH-Wert von 6 und einer Temperatur von 25°C. Hierauf wird der pH-Wert der Farbstofflösung durch Zusatz von Natriumhydroxid auf 10,4 gebracht und die Lösung während 40 Minuten bei 25°C ständig bewegt.

Anstatt die Membran so in zwei Stufen mit der Farbstofflösung zu behandeln, kann man sie auch einstufig während 2 1/2 Stunden beim pH-Wert 10,5 und bei 25°C mit einer 10%igen Lösung des Chromkomplexfarbstoffes behandeln. Zur anschliessenden Wärmebehandlung (Tempern) wird die Membran während 10 Minuten in Wasser von 60°C eingelegt.

Die Herstellung weiterer geeigneter Membranen ist in den übrigen Beispielen der DE-A- 25 05 254 beschrieben.

B. Nach Beispiel 1 der DE-A- 30 35 134:

Eine für die Ultrafiltration geeignete Membran mit einem maximalen Porendurchmesser von 11,5 nm aus einem Acrylnitri-l/Vinylacetat 85:15-opolymerisat, welches die nachfolgenden Rückhaltevermögen aufweist:

2%ige Natriumchloridlösung 6 %
1%ige Natriumsulfatlösung 10 %
Dextrin (Molekulargewicht 70,000) 60 %
1%ige Lösung des Farbstoffs der Formel (4) 34 %

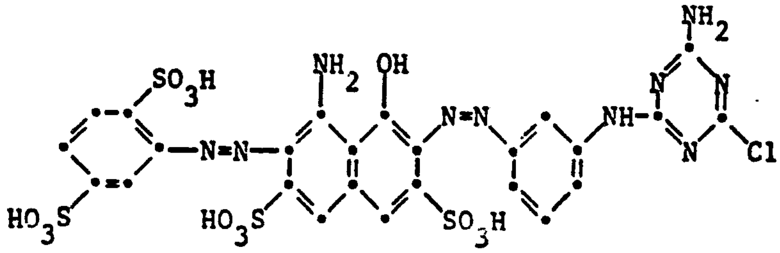 (4)

wird während 5 Minuten bei 65°C mit einer wässrigen Lösung, welche 10 % Hydroxylamin und 7,5 % Natriumcarbonat enthält und einen pH-Wert von 6,5 aufweist, behandelt. Anschliessend wird die Membran aus der Lösung entfernt und in eine gerührte Lösung von 370 mg Cyanurchlorid pro 100 mg Membran gebracht. Diese Lösung wird bei 0°C während 30 Minuten durch die Zugabe von 1 N-Natriumhydroxydlösung bei einem pH-Wert von 10 gehalten. Die Membran wird aus dieser Lösung entfernt, mit Eiswasser gewaschen und in eine gerührte 10%ige Lösung von Polyäthylenimin (Molekulargewicht 40.000) gebracht und dort während 5 Minuten bei Raumtemperatur und einem pH-Wert von 10 gehalten. Die Membran wird aus dieser Lösung entfernt und mit einer Lösung in Kontakt gebracht, welche 4 % des Farbstoffes der Formel

(5) 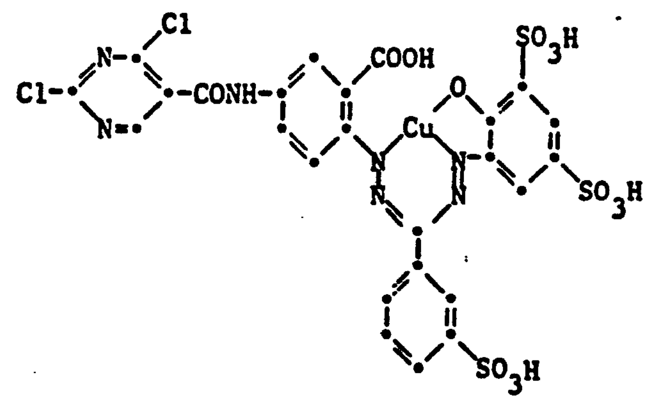

und 10% Natriumchlorid enthält und während 15 Minuten bei Raumtemperatur in dieser Lösung gehalten. Hierauf bringt man die Membran in eine 5%ige Lösung von Natriumcarbonat und hält sie dort während 30 Minuten bei Raumtemperatur. Nach dieser Behandlung wird der Durchfluss und das Ruckhaltevermögen der Membran für verschiedene Farbstoffe, Salze und Komplexe gemessen.

Die Herstellung weiterer geeigneter Membranen ist in den übrigen Beispielen der DE-A- 30 35 134 beschrieben.

C. Nach Beispiel 1 der EP-A- 26 399:

Eine Celluloseacetat-Ausgangsmembran (Acetylgehalt 38,9 %) mit den folgenden Spezifikationen:
Molekulargewicht von Dextrin, welches zu 95 % zurückgehalten wird: 2000
Maximaler Arbeitsdruck: 13 bar
Porendurchmesser: 1,3 nm
Rückhaltevermögen für eine 2%ige Lösung
des Farbstoffs der Formel (4): 82 %
NaCl : 4,5 %
$Na_2SO_4$ : 15 %
Durchfluss einer 2%igen Lösung des Farbstoffes der Formel (4): 55 l/m².h

wird folgendermassen modifiziert: Die Membran wird während 15 Minuten mit einer 5%igen Lösung von Natriumbicarbonat und hierauf während 2 Stunden mit einer 2%igen Petrolätherlösung (Siedepunkt 80-100°C) von Cyanurchlorid behandelt. Nachdem die so behandelte Membran in kaltem Wasser gespült worden ist, wird sie in eine 20%ige, mit Natriumhydroxid auf einen pH-Wert von 9 eingestellte Polyäthyleniminlösung (Molekulargewicht 189) gebracht und dort während 2 Stunden bei 40°C gehalten. Anschliessend wird die Membran während 2 Stunden mit Wasser gespült. Dann wird sie in eine Lösung getaucht, welche 5 % des Reaktivfarbstoffes der Formel (5), 10 % Natriumchlorid und genügend Natriumcarbonat, um den pH-Wert auf

10,5 zu bringen, enthält, und während 2 Stunden bei Raumtemperatur in dieser Lösung belassen. Die Membran wird hierauf bezüglich ihres Rückhaltevermögens und der Durchflussgeschwindigkeit geprüft.

Die Herstellung weiterer geeigneter Membranen ist in den übrigen Beispielen der EP-A 26 399 beschrieben.

**Beispiel 1**

Die aus der Synthese erhaltene Rohlösung von $ZnPc(SO_3Na)_{ca.\,4}$ (ZnPc = Zinkphthalocyaninringsystem), die einen Feststoffgehalt von etwa 13 % aufweist, wird in einer Pilot-Anlage für Umkehrosmose durch eine modifizierte Celluloseacetatmembran (erhalten z.B. gemäss vorstehender Membran-Herstellungsvorschrift A oder C) mit einer Membranfläche von 0,25 $m^2$ unter Anwendung von 25 bar Ueberdruck geführt und so während 6 Stunden aufkonzentriert, wobei Wasser in der Menge des Anfangsvolumens zugegeben wird. Die erhaltene, etwa 25 % Feststoffgehalt aufweisende Photoaktivatorlösung wird mit Natriumsulfat in der Menge des in der Lösung enthaltenen Photoaktivators versetzt. Die erhaltene Mischung wird in einem Düsenzerstäuber mit Granulierdüse zu einem Granulat getrocknet, welches anschliessend über ein Laborluftstrahlsieb von Teilchen <60 µm getrennt wird. Man erhält ein staubarmes Präparat mit hoher Dickte und guter Abriebfestigkeit mit folgender Zusammensetung:

46,5 % $ZnPc(SO_3Na)_{ca.\,4}$,
47,5 % $Na_2SO_4$,
0,15 % NaCl,
0,85 % organische Nebenprodukte und
5 % Restfeuchte.

Das Präparat weist die in der folgenden Tabelle angeführten Eigenschaften auf. Als Vergleich wurden die Werte eines in üblicher Weise hergestellten Präparates (ohne Reinigung und Konzentrierung durch eine halbdurchlässige Membran) in die Tabelle aufgenommen.

**Tabelle**

| Eigenschaft bzw. Testmethode | Ermittelter Testwert | |
|---|---|---|
| | Erfindungsgemässes Präparat | Vergleichspräparat |
| Staubtest | 4 | 3 |
| Hygroskopizität (Wasseraufnahme unter Versuchsbedingungen) | 7,6 % (rieselfähig) | 18,4 % ("geschmolzen") |
| Abriebfestigkeit | 4 | 2 |
| Löslichkeit bei 60°C | 85 g/l | 65 g/l |
| Schüttgewicht | 0,63 kg/l | 0,48 kg/l |
| Kaltwasserlöslichkeit | 100 g/l | 64 g/l |
| Anschlämmen | gut benetzbar | mässig benetzbar |
| Korngrössenverteilung (vor Siebung) | | |
| < 60 µm | 6 % | 18 % |
| 60-350 µm | 74 % | 72 % |
| >350 µm | 20 % | 10 % |
| Lagerstabilität (3 Monate bei Raumtemperatur) | -2,1 %*) | -4,2 %*) |

*) Aktivitätsverlust

Die Durchführung und Bewertungskriterien der in der Tabelle angeführten Tests (Staubtest, Abriebfestigkeit, Löslichkeit bei 60°C Kaltwasserlöslichkeit, Schüttgewicht und Anschlämmen) ist in der EP-A- 37 382, Seiten 20-23 beschrieben.

Es kann auch eine Membran gemäss Herstellungsvorschrift B oder eine beliebige andere in der Beschreibung definierte Membran eingesetzt werden.

**Beispiel 2:**

In analoger Weise, wie in Beispiel 1 beschrieben, wird eine aus der Synthese erhaltene Rohlösung von $AlPcCl(SO_3Na)_{3-4}$ (AlPc = Aluminiumphthalocyaninringsystem) mittels Umkehrosmose an einer modifizierten Membran gereinigt, aufkonzentriert und sprühgranuliert. Man erhält ein festes, lagerstabiles Präparat einer in Beispiel 1 angegebenen analogen Zusammensetzung, jedoch mit $AlPcCl(SO_3Na)_{3-4}$ als Wirksubstanz an Stelle von $ZnPc(SO_3Na)_{ca.\ 4}$. Die an dem erhaltenen Granulat durchgeführten Tests ergeben jenen in der Tabelle des Beispiels 1 angegebenen ähnlichen Resultate.

Die nach dem erfindungsgemässen Verfahren erhaltenen festen Photoaktivatorpräparate können in üblicher Weise weiterverarbeitet werden. Beispielsweise können sie in entsprechender Menge, entweder als solche oder nach Auflösen in Wasser, dem Slurry eines Waschpulvers oder flüssigen Waschmittelzusammensetzungen zugegeben werden.

**Patentansprüche**

1. Verfahren zur Herstellung von festen Photoaktivatorpräparaten enthaltend sulfonierte Zink- oder/und Aluminiumphthalocyanine als Photoaktivatoren, dadurch gekennzeichnet, dass man eine die genannten Photoaktivatoren enthaltende Rohlösung über eine halbdurchlässige, asymmetrische, einen Porendurchmesser von 0,1 bis 50 nm aufweisende Membran führt, die aus einem Celluloseacetat-Grundgerüst, das durch Umsetzung mit einer reaktive Gruppierungen aufweisenden ionischen Verbindung modifiziert ist, besteht, oder die aus einem Grundgerüst besteht, das Polyacrylnitril oder Copolymerisat aus Acrylnitril und anderen äthylenisch ungesättigten Monomeren enthält, welches durch Umsetzung mit Hydroxylamin und anschliessender Umsetzung mit einer polyfunktionellen monomeren Verbindung, einem polyfunktionellen Polymer und einer reaktive Gruppierungen aufweisenden ionischen Verbindung modifiziert ist, und anschliessend die erhaltene konzentrierte Photoaktivatorlösung schonend trocknet, wobei vor der Trocknung in der Waschmittelindustrie übliche Coupagemittel oder/und oberflächenaktive Substanzen zugegeben werden können.

2. Verfahren nach Anspruch 1, dadurch gekennzeichnet, dass die Membran aus einem Celluloseacetat-Grundgerüst besteht, das durch Umsetzung mit einer polyfunktionellen monomeren Verbindung, einem polyfunktionellen Polymer und einer reaktive Gruppierungen aufweisenden ionischen Verbindung modifiziert ist.

3. Verfahren nach Anspruch 1 oder 2, dadurch gekennzeichnet, dass das polyfunktionelle Polymer im Membran-Grundgerüst aliphatische oder aromatische Aminogruppen, Hydroxyl-, Thiol-, Isocyanat- und/oder Isothiocyanatgruppen aufweist.

4. Verfahren nach Anspruch 3, dadurch gekennzeichnet, dass sich das polyfunktionelle Polymer von Polyäthylenimin, Polyvinylalkohol, Cellulosederivaten, Polyvinylamin oder Polyvinylanilin ableitet.

5. Verfahren nach Anspruch 1 oder 2, dadurch gekennzeichnet, dass die Membran als ionische Gruppen Sulfonsäure-, Carbonsäure- oder Ammoniumgruppen enthält.

6. Verfahren nach Anspruch 1, dadurch gekennzeichnet, dass die Membran ls reaktive Gruppierungen aufweisende ionische Verbindung Reste eines wasserlöslichen Reaktivfarbstoffes enthält.

7. Verfahren nach Anspruch 1, dadurch gekennzeichnet, dass der Anteil der Acrylnitrileinheiten im Grundgerüst der Membran mindestens 5 % und vorzugsweise mindestens 20 % beträgt.

8. Verfahren nach Anspruch 7, dadurch gekennzeichnet, dass das Grundgerüst der Membran Copolymere von Acrylnitril und Vinylacetat, Vinyläthern, Vinylpyridin, Vinylchlorid, Styrol, Butadien, (Meth)acrylsäure, Maleinsäureanhydrid, 2-Aminomethylmethacrylat oder Allylverbindungen oder Ter- oder Tetrapolymere auf Acrylnitrilbasis enthält.

9. Verfahren nach Anspruch 1, dadurch gekennzeichnet, dass man als sulfoniertes Zink- oder Aluminiumphthalocyanin ein solches der Formel

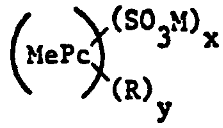

,

worin MePc das Zink- oder Aluminiumphthalocyaninringsystem, M Wasserstoff, ein Alkalimetall- oder Ammoniumion, R Fluor, Chlor, Brom oder Jod, x eine beliebige Zahl von 1,3 bis 4 und y eine beliebige Zahl von 0 bis 4 bedeuten, wobei im Molekül vorhandene Substituenten R gleich oder verschieden sein können, oder Mischungen von solchen Phthalocyaninen, einsetzt.

10. Verfahren nach einem der Ansprüche 1 bis 9, dadurch gekennzeichnet, dass man die konzentrierte wässrige Photoaktivatorlösung in einem Granulierapparat, vorzugsweise mittels Sprühgranulierung, trocknet.

11. Verfahren nach einem der Ansprüche 1 bis 9, dadurch gekennzeichnet, dass man die konzentrierte wässrige Photoaktivatorlösung in einem Zerstäubungstrockner oder in einer Wirbelschichtanlage trocknet.

12. Verfahren nach einem der Ansprüche 1 bis 11, dadurch gekennzeichnet, dass man der konzentrierten wässrigen Photoaktivatorlösung vor der Trocknung in der Waschmittelindustrie übliche Coupagemittel oder/und anionische, nichtionische, semipolare, ampholytische oder/und zwitterionische oberflächenaktive Substanzen zugibt.

13. Verfahren nach Anspruch 12, dadurch gekennzeichnet, dass man als Coupagemittel Alkalimetallsulfate, -carbonate, -borate, -phosphate, -polyphosphate, -bicarbonate und -silicate, Aminopolycarboxylate, Phytate, Polyphosphonate und -carboxylate, Carboxymethylcellulose, Polysiloxane oder Aluminiumsilicate, vorzugsweise Natriumsulfat, einsetzt.

14. Verfahren nach Anspruch 12, dadurch gekennzeichnet, dass man als oberflächenaktive Substanzen Alkylbenzolsulfonate, Alkylsulfate, äthoxylierte Alkyläthersulfate, Paraffinsulfonate, α-Olefinsulfonate, α-Sulfocarbonsäuren, deren Salze und Ester, Alkylglyceryläthersulfonate, Fettsäuremonoglyceridsulfate oder -sulfonate, Alkylphenolpolyäthoxyäthersulfate, 2-Acyloxyalkansulfonate, β-Alkyloxyalkansulfonate, Seifen, äthoxylierte Fettalkohole, Alkylphenole, Polypropoxyglykole, Polypropoxy-äthylendiamine, Aminoxide, Phosphinoxide, Sulfoxide, aliphatische sekundäre und tertiäre Amine, aliphatische quaternäre Ammonium-, Phosphonium- und Sulfoniumverbindungen oder Mischungen der genannten Substanzen einsetzt.

15. Verfahren nach Anspruch 13, dadurch gekennzeichnet, dass man vor der Trocknung Natriumsulfat zusetzt und die Lösung durch Sprühgranulation trocknet.

16. Festes, gemäss Anspruch 1 erhaltenes Photoaktivatorpräparat, dadurch gekennzeichnet, dass es 30-97 Gew.% eines oder mehrerer sulfonierter Zink- oder/und Aluminiumphthalocyanine, insbesondere der Formel

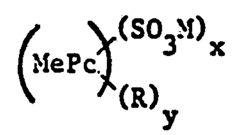 ,

worin MePc das Zink- oder Aluminiumphthalocyaninringsystem, M Wasserstoff, ein Alkalimetall- oder Ammoniumion, R Fluor, Chlor, Brom oder Jod, x eine beliebige Zahl von 1,3 bis 4 und y eine beliebige Zahl von 0 bis 4 bedeuten, wobei im Molekül vorhandene Substituenten R gleich oder verschieden sein können, 0-60 Gew.% eines oder mehrerer in der Waschmittelindustrie üblicher Coupagemittel oder/und oberflächenaktiver Substanzen, 2 bis 10 Gew.% Restfeuchte, 0,05 bis 1 Gew.% NaCl und 0,1 bis 2 Gew.% organische Nebenprodukte enthält.

17. Präparat nach Anspruch 16, dadurch gekennzeichnet, dass es als Coupagemittel Alkalimetallsulfate, -carbonate, -borate, phosphate, -polyphosphate, -bicarbonate und -silicate, Aminopolycarboxylate, Phytate, Polyphosphonate und -carboxylate, Carboxym ethylcellulose, Polysiloxane oder Aluminiumsilicate, vorzugsweise Natriumsulfat, enthält.

18. Präparat nach Anspruch 16, dadurch gekennzeichnet, dass es als oberflächenaktive Substanzen Alkylbenzolsulfonate, Alkylsulfate, äthoxylierte Alkyläthersulfate, Paraffinsulfonate, α-Olefinsulfonate, α-Sulfocarbonsäuren, deren Salze und Ester, Alkylglyceryläthersulfonate, Fettsäuremonoglyceridsulfate oder -sulfonate, Alkylphenolpolyäthoxyäthersulfate, 2-Acyloxyalkansulfonate, β-Alkyloxyalkansulfonate, Seifen, äthoxylierte Fettalkohole, Alkylphenole, Polypropoxyglykole, Polypropoxy-äthylendiamine, Aminoxide, Phosphinoxide, Sulfoxide, aliphatische sekundäre und tertiäre Amine, aliphatische quaternäre Ammonium-, Phosphonium- und Sulfoniumverbindungen oder Mischungen der genannten Substanzen enthält.

19. Präparat nach Anspruch 16, dadurch gekennzeichnet, dass es 35 bis 60 Gew.% eines Phthalocyanin-Photoaktivators der in Anspruch 16 angegebenen Formel, 35 bis 60 Gew.% $Na_2SO_4$, 3 bis 8 Gew.% Restfeuchte, 0,1 bis 0,5 Gew.% NaCl und 0,1 bis 1 Gew.% organische Nebenprodukte enthält.

20. Präparat nach einem der Ansprüche 16-19, dadurch gekennzeichnet, dass es als sulfoniertes Phthalocyanin ein solches der Formel

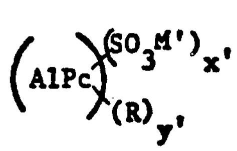 oder (ZnPc-)-(-$SO_3M'$)$_{x'}$

enthält, worin AlPc das Aluminiumphthalocyaninringsystem, ZnPc das Zinkphthalocyaninringsystem, M' Wasserstoff, Natrium oder Kalium, x' eine beliebige Zahl vom 2 bis 4, R Fluor, Chlor, Brom oder Jod und y' eine beliebige Zahl von 0 bis 1,5 bedeuten.

## Claims

1. A process for the preparation of a solid photoactivator formulation containing sulfonated zinc and/or aluminium phthalocyanines as photoactivators,which comprises passing a crude solution containing said photoactivators through a semipermeable asymmetrical membrame having a pore diameter of 0.1 to 50 nm and consisting of a cellulose acetate basic structure which is modified by reaction with an ionic compound which contains reactive groups, or which consists of a basic structure which contains polyacrylonitrile or a copolymer of acrylonitrile and other ethylenically unsaturated monomers, and which is modified by reaction with hydroxylamine and subsequent reaction with a polyfunctional monomer, a polyfunctional polymer and an ionic compound which contains reactive groups, and subsequently drying the concentrated photoactivator solution so obtained under mild conditions and, if desired, adding fillers and/or surfactants customarily employed in the detergent industry before drying said solution.

2. A process according to claim 1, wherein the membrane consists of a cellulose acetate basic structure which is modified by reaction with a polyfunctional monomer, a polyfunctional polymer and an ionic compound which contains reactive groups.

3. A process according to either of claims 1 or 2, wherein the polyfunctiomal polymer in the basic structure of the membrane contains aliphatic or aromatic amino groups, hydroxyl, thiol, isocyanate and/or isothiocyanate groups.

4. A process according to claim 3, wherein the polyfunctional polymer is derived from polyethyleneimine, polyvinyl alcohol, cellulose derivatives, polyvinylamine or polyvinylaniline.

5. A process according to either of claims 1 or 2, wherein the membrane contains sulfonic acid, carboxylic acid or ammonium groups as ionic groups.

6. A process according to claim 1, wherein the membrane contains radicals of a water-soluble reactive dye as ionic compound which contains reactive groups.

7. A process according to claim 1, wherein the basic structure of the membrane contains at least 5 %, and preferably at least 20%, of acrylonitrile units.

8. A process according to claim 7, wherein the basic structure of the membrane contains copolymers of acrylonitrile and vinyl acetate, vinyl ethers, vinyl pyridine, vinyl chloride, styrene, butadiene, acrylic or methacrylic acid, maleic anhydride, 2-aminomethylmeth-acrylate or allyl compounds or terpolymers or tetrapolymers of acrylonitrile.

9. A process according to claim 1, which comprises the use of a sulfonated zinc or aluminium phthalocyanine of the formula

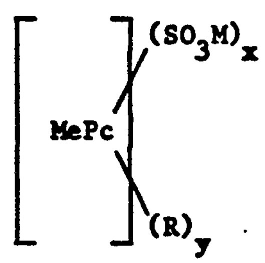 ,

wherein MePc is the zinc or aluminiun phthalocyanine ring system, M is hydrogen, an alkali metal ion or an ammonium ion, R is fluorine, chlorine, bromine or iodine, x is any value from 1.3 to 4 and y is any value from 0 to 4, with the proviso that substituents R in the molecule may be identical or different, or a mixture thereof.

10. A process according to any one of claims 1 to 9, wherein the concentrated aqueous photoactivator solution is dried in a granulator, preferably by spray granulation.

11. A process according to any one of claims 1 to 9, wherein the concentrated aqueous photoactivator solution is dried in a spray drier or in a fluid bed drier.

12. A process according to any one of claims 1 to 11, wherein fillers and/or anionic, nonionic, semipolar, ampholytic and/or zwitterionic surfactants customarily used in the detergent industry are added to the concentrated aqueous photoactivator solution before drying said solution.

13. A process according to claim 12, wherein the fillers employed are alkali metal sulfates, carbonates, borates, phosphates, polyphosphates, bicarbonates and silicates, aminopolycarboxylates, phytates, polyphosphonates and polycarboxylates, carboxymethyl cellulose, polysiloxanes or aluminium silicates, preferably sodium sulfate.

14. A process according to claim 12, wherein the surfactants employed are alkylbenzenesulfonates, alkylsulfates, ethoxylated alkyl ether sulfates, paraffin sulfonates, α-olefin sulfonates, α-sulfocarboxylic acids and salts and esters thereof, alkyl glyceryl ether sulfonates, fatty acid monoglyceride sulfates or sulfonates, alkylphenol polyethoxy ether sulfates, 2-acyloxyalkane sulfonates, β-alkyloxyalkane sulfonates, soaps, ethoxylated fatty alcohols, alkylphenols, polypropoxy glycols, polypropoxyethylenediamines, amine oxides, phosphine oxides, sulfoxides, aliphatic secondary and tertiary amines, aliphatic quaternary ammonium, phosphonium and sulfonium compounds, or mixtures of the above surfactants.

15. A process according to claim 13, wherein sodium sulfate is added before drying and the solution is dried by spray granulation.

16. A solid photoactivator formulation obtained according to the process as claimed in claim 1, which formulation contains 30 to 97 % by weight of a sulfonated aluminium and/or zinc phthalocyanine, in particular of the formula

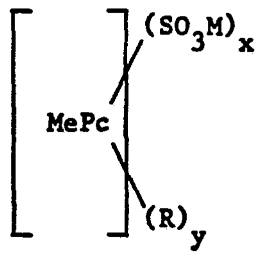
,

wherein MePc is the zinc or aluminium phthalocyanine ring system, M is hydrogen, an alkali metal ion or an ammonium ion, R is fluorine, chlorine, bromine or iodine, x is any value from 1.3 to 4 and y is any value from 0 to 4, with the proviso that substituents R in the molecule may be identical or different, 0 to 60 % by weight of one or more fillers and/or surfactants customarily employed in the detergent industry, 2 to 10 % by weight of residual moisture, 0.05 to 1 % by weight of NaCl, and 0.1 to 2 % by weight of organic by-products.

17. A formulation according to claim 16, which contains alkali metal sulfates, carbonates, borates, phosphates, polyphosphates, bicarbonates and silicates, aminopolycarboxylates, phytates, polyphosphonates and polycarboxylates, carboxymethyl cellulose, polysiloxanes or aluminium silicates, preferably sodium sulfate, as fillers.

18. A formulation according to claim 16, which contains alkylbenzenesulfonates, alkylsulfates, ethoxylated alkyl ether sulfates, paraffin sulfonates, α-olefin sulfonates, α-sulfocarboxylic acids and salts and esters thereof, alkyl glyceryl ether sulfonates, fatty acid monoglyceride sulfates or sulfonates, alkylphenol polyethoxy ether sulfates, 2-acyloxyalkane sulfonates, β-alkyloxyalkane sulfonates, soaps, ethoxylated fatty alcohols, alkylphenols, polypropoxy glycols, polypropoxyethylenediamines, amine oxides, phosphine oxides, sulfoxides, aliphatic secondary and tertiary amines, aliphatic quaternary ammonium, phosphonium and sulfonium compounds, or mixtures of the above surfactants as surfactants.

19. A formulation according to claim 16, which contains 35 to 60 % by weight of a phthalocyanine photoactivator of the formula as indicated in claim 16, 35 to 60 % by weight of $Na_2SO_4$, 3 to 8 % by weight of residual moisture 0.1 to 0.5 % by weight of NaCl and 0.1 to 1 % by weight of organic by-products.

20. A formulation according to any one of claims 16 to 19, which contains a sulfonated phthalocyanine of the formula

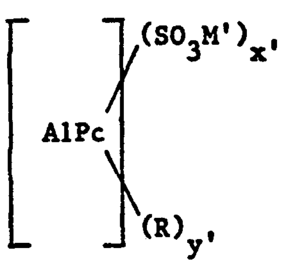

or

(ZnPc)-$(SO_3M')_{x'}$

wherein AlPc is the aluminium phthalocyamine ring system, ZnPc is the zimc phthalocyamine ring system, M' is hydrogen, sodium or potassium, x' is any value from 2 to 4, R is fluorine, chlorine, bromine or iodine and y' is any value from 0 to 1.5.

**Revendications**

1. Procédé pour la préparation de compositions solides de photoactivateurs, contenant en tant que photoactivateurs des zinco- et/ou aluminophtalocyanines sulfonées, caractérisé par le fait que l'on fait passer une solution brute, contenant les photoactivateurs cités, sur une membrane semi-perméable, asymétrique, présentant un diamètre de pores de 0,1 à 50 nm, qui est constituée d'un résesu de base d'acétate de cellulose qui est modifié par réaction avec un composé ionique comportant des groupements réactifs, ou qui est constituée d'un réseau de base qui contient du polyacrylonitrile ou un copolymère d'acrylonitrile et d'autres monoméres à insaturation éthylénique, lequel réseau est modifié par réaction avec de l'hydroxylamine et réaction subséquente avec un compose monomère polyfonctionnel, un polymère polyfonctionnel et un composé ionique comportant des groupements réactifs, et ensuite on sèche de façon ménagée la solution concentrée de photo-activateur ainsi obtenue, des adjuvants et/ou des substances tensio-actives, utilisés habituellement dans l'industrie des détergents, pouvant être ajoutés avant le séchage.

2. Procédé selon la revendication 1, caractérisé par le fait que la membrane est constituée d'un réseau de base d'acétate de cellulose qui est modifié par réaction avec un composé monomère polyfonctionnel, un polymère polyfonctionnel et un composé ionique comportant des groupements réactifs.

3. Procédé selon la revendication 1 ou 2, caractérisé par le fait que le polymère polyfonctionnel présent dans le réseau de base de la membrane comporte des groupes amino, hydroxyle, thiol, isocyanate, et/ou isothiocyanate, aliphatiques ou aromatiques.

4. Procédé selon la revendication 3, caractérisé par le fait que le polymère polyfonctionnel dérive de la polyéthylène-imine, du poly(alcool vinylique), de dérivés de la cellulose, de la polyvinylamine ou de la polyvinylaniline.

5. Procédé selon la revendication 1 ou 2, caractérisé par le fait que la membrane contient en tant que groupes ioniques des groupes sulfo, carboxyle ou ammonium.

6. Procédé selon la revendication 1, caractérisé par le fait que la membrane contient, en tant que composé ionique-comportant des groupements réactifs, des restes d'un colorant réactif soluble dans l'eau.

7. Procédé selon la revendication 1, caractérisé par le fait que la proportion des motifs acrylonitrile dans le réseau de base da la membrane s'élève au moins à 5% et, de préference, au moins à 20%.

8. Procédé selon la revendication 7, caractérisé par le fait que le réseau de base de la membrane contient des copolymères d'acrylonitrile et d'acétate de vinyle, d'éthers vinyliques, de vinylpyridine, de chlorure de vinyle, de styrène, de butadiène, d'acide (méth)acrylique, d'anhydride maléique, de 2-aminométhyl-acrylate le méthyle ou de composés allyle, ou bien des ter- ou tétrapolymères à base d'acrylonitrile.

9. Procédé selon la revendication 1, caractérisé par le fait que l'on utilise en tant que zinco- ou aluminophtalocyanine une telle phtalocyanine de formule

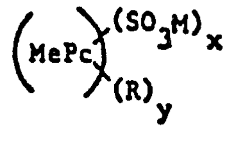

,

dans laquelle MePc représente le système cyclique zinco- ou aluminophtalocyanine; M représente un atome d'hydrogène, un ion alcalin ou ammonium; R représente le fluor, le chlore, le brome ou l'iode; x est un nombre quelconque allant de 1,3 à 4; et y est un nombre quelconque allant de 0 à 4; les substituants R présents dans la molécule pouvant être identiques ou différents; ou des mélanges de telles phtalocyanines.

10. Procédé selon l'une des revendications 1 à 9, caractérisé par le fait que l'on sèche la solution aqueuse concentrée de photo-activateur dans un appareil de granulation, de préférence au moyen d'une granulation par pulvérisation.

11. Procédé selon l'une des revendications 1 à 9, caractérisé par le fait que l'on sèche la solution aqueuse concentrée de photo-activateur dans un sécheur-atomiseur ou dans une installation tourbillonnaire.

12. Procédé selon l'une des revendications 1 à 11, caractérisé par le fait qu'avant le séchage on ajoute à la solution aqueuse concentrée de photo-activateur des adjuvants et/ou des substances tensio-actives anioniques, non ioniques, semi-polaires, ampholytes et/ou amphotères, utilisés habituellement dans l'industrie des détergents.

13. Procédé selon la revendication 12, caractérisé par le fait que l'on utilise en tant qu'adjuvants des sulfates, carbonates, borates, phosphates, polyphosphates, bicarbonates et silicates, de métaux alcalins, des aminopolycarboxylates, des phytates, des polyphosphonates et polycarboxylates, la carboxyméthylcellulose, des polysiloxanes ou des silicates d'aluminium, de préférence le sulfate de sodium.

14. Procédé selon la revendication 12, caractérisé par le fait que l'on utilise en tant que substances tensio-actives des benzènesulfonates d'alkyle, des sulfates d'alkyle, des alkyléthersulfates oxyéthylés, des sulfonates de paraffine, des sulfonates d'α-oléfines, des acides α-sulfocarboxyliques, leurs sels et leurs esters, des alkylglycéryléthersulfonates, des sulfates ou des sulfonates de monoglycérides d'acides gras, des alkylphénol-polyéthoxyéthersulfates, des 2-acyloxyalcanesulfonates, des β-alkyloxyalcane-sulfonates, des savons, des alcools gras oxy-éthylés, des alkylphénols, des polypropoxyglycols, des polypropoxy-éthylènediamines, des oxydes d'amines, des oxydes de phosphines, des sulfoxydes, des amines aliphatiques secondaires ou tertiaires, des composés ammonium, phosphonium ou sulfonium quaternaire aliphatiques, ou des mélanges des substances citées.

15. Procédé selon la revendication 13, caractérisé par le fait que l'on ajoute du sulfate de sodium avant le séchage et que l'on sèche la solution par granulation par pulvérisation.

16. Composition solide de photo-activateur obtenue selon la revendication 1, caractérisée par le fait qu'elle contient de 30 à 97% en poids d'une ou de plusieurs zinco- et/ou alumino-phtalocyanines sulfonées, en particulier de formule

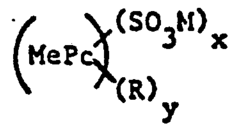

dans laquelle MePc représente le système cyclique zinco- ou aluminophtalocyanine; M représente un atome d'hydrogène ou un ion alcalin ou ammonium R représente le fluor, le chlore, le brome ou l'iode, x est un nombre quelconque allant de 1,3 à 4, et y est un nombre quelconque allant de 0 à 4, les substituants R présents dans la molécule pouvant être identiques ou différents; 0-60% en poids d'un ou de plusieurs adjuvants et/ou une ou plusieurs substances tensio-actives utilisés habituellement dans l'industrie des détergents; de 2 à 10% en poids d'humidité résiduelle; de 0,05 à 1% en poids de NaCl; et de 0,1 à 2% en poids de sous-produits organiques.

17. Composition selon la revendication 16, caractérisée par le fait qu'elle contient en tant qu'adjuvants des sulfates, carbonates, borates, phosphates, polyphosphates, bicarbonates et silicates, de métaux alcalins, des aminopolycarboxylates, des phytates, des polyphosphonates et polycarboxylates, de la carboxyméthylcellulose, des polysiloxanes ou des silicates d'aluminium, de préférence du sulfate de sodium.

18. Composition selon la revendication 16, caractérisée par le fait qu'elle contient en tant que substances tensio-actives des benzènesulfonates d'alkyle, des sulfates d'alkyle, des alkyléthersulfates oxyéthylés, des sulfonates de paraffine, des sulfonates d'α-oléfines, des acides α-sulfocarboxyliques, leurs sels et leurs esters, des alkylglycéryléthersulfonates, des sulfates ou des sulfonates de monoglycérides d'acides gras, des alkylphénol-polyéthoxyéthersulfates, des 2-acyloxyalcanesulfonates, des β-alkyloxyalcane-sulfonates, des savons, des alcools gras oxy-éthylés, des alkylphénols, des polypropoxyglycols, des polypropoxy-éthylénediamines, des oxydes d'amines, des oxydes de phosphines, des sulfoxydes, des amines aliphatiques secondaires ou tertiaires, des composés ammonium, phosphonium ou sulfonium quaternaire aliphatiques, ou des mélanges des substances citées.

19. Composition selon la revendication 16, caractérisée par le fait qu'elle contient de 35 à 60% en poids d'un photo-activateur de type phtalocyanine de formule indiquée dans la revendication 16, de 35 à 60% en poids de $Na_2SO_4$, de 3 à 8% en poids d'humidité résiduelle, de 0,1 à 0,5% en poids de NaCl et de 0,1 à 1% en poids de sous-produits organiques.

20. Composition selon l'une des revendications 16 à 19, caractérisée par le fait qu'elle contient en tant que phtalocyanine sulfonée une phtalocyanine de formule

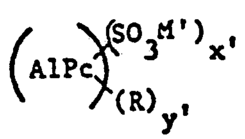 ou $(ZnPc)-(SO_3M')_{x'}$

dans lesquelles AlPc représente le système cyclique aluminophtalocyanine, ZnPc représente le système cyclique zincophtalocyanine, M' représente un atome d'hydrogène, de sodium ou de potassium, x' est un nombre quelconque allant de 2 à 4, R représente le fluor, le chrome, le brome ou l'iode, et y'est un nombre quelconque allant de 0 à 1,5.